(19) Europäisches Patentamt

European Patent Office

Office européen des brevets

(11) **EP 1 030 186 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(51) Int Cl.⁷: **G01S 1/04**

(21) Anmeldenummer: **00102003.1**

(22) Anmeldetag: **02.02.2000**

(54) **GPS-Navigationssystem für Raumfahrtanwendungen**

GPS navigation system for space application

Système de navigation GPS pour des applications spatiales

(84) Benannte Vertragsstaaten:
**DE ES FR GB IT**

(30) Priorität: **19.02.1999 DE 19907235**

(43) Veröffentlichungstag der Anmeldung:
**23.08.2000 Patentblatt 2000/34**

(73) Patentinhaber: **EADS Astrium GmbH**
**81663 München (DE)**

(72) Erfinder:
• **Fichter, Walter**
**81371 München (DE)**
• **Gottzein, Eveline, Dr. Prof.**
**85635 Höhenkirchen (DE)**
• **Krauss, Peter-Alexander, Dr.**
**81371 München (DE)**
• **Mittnacht, Michael**
**85635 Höhenkirchen (DE)**

(74) Vertreter: **Ulrich, Thomas**
**EADS Deutschland GmbH**
**Patentabteilung LG-PM**
**Willy-Messerschmidt-Strasse**
**85521 Ottobrunn (DE)**

(56) Entgegenhaltungen:
DE-A- 4 211 933          DE-C- 4 326 237
US-A- 5 030 958          US-A- 5 193 064
US-A- 5 528 502          US-A- 5 808 565

**Beschreibung**

Die Erfindung betrifft ein integriertes GPS (Global Positioning System)-Navigationssystem für Raumfahrtanwendungen.

Eine Anordnung zur Positionsbestimmung mit einem für sich funktional abgeschlossenen GPS-Empfänger ist beispielsweise aus dem Dokument US 5,030,958 bekannt. Die dortige Einrichtung weist zusätzlich eine Kreiselkompassnavigationsanlage (ESGN) auf. Der dort offenbarte GPS-Empfänger weist insbesondere einen Signalprozessor zur Verarbeitung von GPS-Rohdaten-Messwerten und zur Positionsbestimmung basierend auf diesen Rohdaten auf, der über eine Datenbusleitung mit einem zusätzlichen, externen Bordrechner verbunden ist. Auch das Dokument DE 42 11 933 beschreibt eine Anordnung zur Positionsbestimmung mit Hilfe von GPS, bei der ein für sich funktional abgeschlossener GPS-Empfänger in einem Fahrzeug vorgesehen ist, wobei der GPS-Empfänger mit einem zusätzlichen, externen Bordrechner in Datenaustausch steht.

Auch zur bordautonomen Bestimmung von Navigationsdaten von Satelliten, insbesondere zur Bestimmung von Position, Geschwindigkeit und GPS-Zeit, werden bei Erdumlaufbahnen GPS-Navigationssysteme oder GPS-Empfänger eingesetzt.
Abhängig davon, an welchem Ort sich der Satellit mit GPS-Empfänger im Vergleich zu der GPS-Satellitenkonstellation (Bahnhöhe ca. 20000 km) befindet, sind hierzu folgende Zuordnungen zu berücksichtigen: zum einen Satellitenbahnen die unterhalb der GPS-Satel-litenkonstellation (Low Earth Orbit, LEO) und zum anderen Satellitenbahnen, die über der GPS-Satellitenkonstellation und üblicherweise auf geostationären Bahnen (GEO, ca. 36000 km) fliegen.

Bei LEO-Satelliten kann mit dem üblichen Verfahren zur Positionsbestimmung mit GPS navigiert werden. Dabei werden mindestens vier Signallaufzeiten von vier verschiedenen GPS-Satelliten zum GPS-Empfänger in parallelen Kanälen gemessen und verarbeitet und daraufhin die Position (drei Unbekannte), und der Uhren-Bias, d.h. die Differenz zu einem Zeit-Referenzwert (eine Unbekannte), berechnet. Aufgrund der geometrischen Bedingungen auf niedrigen Bahnen sind normalerweise (mit sehr hoher Wahrscheinlichkeit) immer vier oder mehr GPS-Satelliten sichtbar. Die Genauigkeit der Positionslösung hängt von der geometrischen Verteilung der sichtbaren GPS-Satelliten ab. Ein Maß hierfür ist der "Dilution of Precision"-Wert (DOP), der nur für vier oder mehr Satelliten definiert ist. Diese Maßzahl wird üblicherweise auch zur Navigationsplanung benutzt, d.h. zur Festlegung der GPS-Satelliten, die zur Positionsbestimmung verwendet werden, und ist ein Maß für die Fehlerverstärkung aufgrund von Rohdaten-Meßfehlern.

Alternativ dazu werden bei LEO-Satelliten zur Positionsbestimmung auch sequentielle Schätzverfahren (Filter-Verfahren, z.B. Kalman-Filter) eingesetzt. Hierbei werden zeitlich aufeinanderfolgende Messungen mit Hilfe von dynamischen Modellen für die Bahnbewegung und die Borduhr miteinander verknüpft, so daß diese Schätzverfahren im Fall von LEO-Satelliten zu deutlich verbesserten Schätzergebnissen führt. Bei LEO-Anwendungen mit sequentiellen Schätzverfahren werden üblicherweise auch GPS-Empfänger mit vier oder mehr parallelen Kanälen benutzt, so daß auch bei diesem Schätzverfahren das DOP-Maß zur Bewertung von Na-vigationslösungen, d.h. insbesondere zur Überwachung der geometrischen Unabhängigkeit der Meßinformationen benutzt werden kann.

Die Verwendung von GPS im geostationären Orbit bei GEO-Satelliten wurde bis jetzt nicht realisiert. Bei GEO-Satelliten ist die Verwendung von sequentiellen Schätzverfahren erforderlich, da in diesem Fall (fast) nie die Daten von vier GPS-Satelliten gleichzeitig empfangen werden können, d.h. man ist auf zeitlich aufeinanderfolgende Messungen angewiesen. Allerdings führt die aus Sicht des GEO-Orbit schlechte geometrische Verteilung der GPS-Satelliten dazu, daß das Schätzergebnis sehr stark von der Modellierungsunsicherheit der Borduhr abhängt. In der Veröffentlichung von S. Averin, V. Vinogradov, N. Ivanov, V. Salischev "On Combined Application of GLONASS and GPS Systems in Conditions of Limited" (in "Observability of Navigation Satellites", ION GPS 96, Seite 287 ff) wird eine Möglichkeit beschrieben, wie diese Schwierigkeit umgangen werden kann: statt Laufzeitmessungen zu verwenden, werden Differenzen von Laufzeitmessungen als Meßgröße verwendet. Dadurch wird der Uhren-Bias bzw. der Zeit-Differenzwert der Borduhr eliminiert und das dynamische Modell für den Schätzfilter besteht nur noch aus einer mit verhältnismäßig guter Genauigkeit bekannten Bahndynamik, aber enthält nicht mehr das relativ unsichere Uhrenmodell.

Der gerätetechnische Aufbau eines üblichen GPS-Empfängers umfaßt normalerweise folgende vier Komponenten: eine Antenne, ein HF(Hochfrequenz)-Front-End (Vorverstärker, Abwärtsmischer, A/D-Wandlung), eine digitale Signalverarbeitung, die insbesondere eine Korrelation zur Bestimmung von Trägerphasen und Codephasen umfaßt und durch spezielle digitale Elektronikbausteine (ASICs) realisiert ist und einen Navigationsprozessor (Regelschleifen für Frequency Lock Loop, Phase Lock Loop, Delay Lock Loop, Dekodierung der Navigationsdaten, Navigationsplanung und Positionsbestimmung).

Bekannte Verfahren bzw. Vorrichtungen sind in kommerziell erhältlichen GPS-Navigationssystemen in Form von autonomen Geräten implementiert bzw. verfügbar. Diese Geräte haben in bezug auf Raumfahrtanwendungen den Nachteil, daß die Ressourcen nicht mit anderen (Software-) Anwendungen eines an Bord des Satelliten befindlichen Rechners geteilt werden können. Es sind also bei den beschriebenen LEO-Verfahren bzw. -Vorrichtungen ein eigener Rechner (CPU), ein Programm- und Datenspeicher, eine Borduhr, eine Energieversorgung sowie Software-Module insbesondere zur Fehlerüberwachung und -behandlung zusätzlich zu den im LEO-Satelliten vorgesehenen Systemen vorzusehen. Dadurch erhöhen sich das Gewicht, die Leistung, die Komplexität und die Kosten des Gesamtsystems. Außerdem kann bei der Positionsschätzung mit sequentieller Datenverarbeitung (Filterung) nicht oder nur eingeschränkt auf Informationen zugegriffen werden, die im Bordrechner des Satelliten vorhanden sind und das Schätzergebnis der Position verbessern würden. Diese Informationen beziehen sich z.B. auf genaue Modelle der Störkräfte auf den Satelliten, hervorgerufen durch Schub der an Bord befindlichen Triebwerke, oder Satellitenspezifische Daten, die Kräfte des solaren Strahlungsdrucks repräsentieren. Der Zugriff auf diese Daten ist insbesondere dann wichtig, wenn sie während des Satellitenbetriebs aktualisiert werden (z.B. Satellitenmasse).

Ein weiterer Nachteil bekannter Vorrichtungen ist, daß ein beträchtlicher Teil der Signalverarbeitung (Korrelation) eines GPS-Empfängers mit elektronischer Hardware realisiert ist. Strahlungsfeste elektronische Bauteile, wie sie für Raumfahrtanwendungen verwendet werden, sind jedoch sehr teuer und erhöhen dadurch die Kosten für GPS-Empfänger, oder sie sind kommerziell gar nicht verfügbar und müßten speziell angefertigt werden.

Der Erfindung liegt die Aufgabe zugrunde, an Bord eines LEO- oder GEOSatelliten ein vereinfachtes GPS-Navigationssystem vorzusehen, das trotzdem die üblichen Anforderungen bezüglich der Strahlungsfestigkeit erfüllt. Diese Aufgabe wird erfindungsgemäß dadurch gelöst, dass das GPS-Navigationssystem möglichst viele Funktionen oder Ressourcen mit den bereits an Bord des Satelliten vorhandenen Einrichtungen teilt. Dies wird insbesondere erzielt, indem ein Signalprozessor zur Dekodierung der GPS-Signale und zur Erzeugung von Rohdaten-Messewerten über eine Datenbus-Leitung zum Datenaustausch mit einem Rechner verbunden ist, wobei der Rechner als Bordrechner eines Satelliten ausgebildet ist und das GPS-Navigationssystem und der Bordrechner eine integrierte Einrichtung bilden, die so ausgebildet ist, dass das GPS-Navigationssystem Funktionen oder Ressourcen mit dem Bordrechner teilt.

Ein Vorteil der Erfindung ist, daß ein großer Teil der Signalverarbeitung, insbesondere die Korrelation der GPS-Codes und des Trägersignales, softwaretechnisch realisiert wird. Dadurch wird die Verwendung von teuren, strahlungsfesten elektronischen Spezialbausteinen (ASICs-Applica-tion Specific Integrated Circuits) vermieden.

Um möglichst wenig Rechenleistung erforderlich zu machen, wird erfindungsgemäß die Anzahl der parallel verarbeiteten Kanäle möglichst klein gehalten, wobei vorzugsweise weniger als vier Kanäle verwendet werden, (z.B. ein oder zwei Kanäle). Dies bedeutet jedoch eine (künstlich) reduzierte Sichtbarkeit von GPS-Satelliten, sogar auf Umlaufbahnen unterhalb der GPS- Bahnhöhe (ca. 20000 km), d.h. es werden die Meßdaten einer eingeschränkten Zahl von Satelliten verwendet. Die Positionsbestimmung ist dann nicht direkt möglich, sondern nur mit Hilfe von sequentiellen Schätzverfahren (Filterverfahren). Dies bedeutet aber keine Einschränkung, da die Filterverfahren im wesentlichen auf Bahnmodellen und Störkraftmodellen, z.B. Düsenaktivitäten beruhen, die sehr genau bekannt sind und zum größten Teil ohnehin als Software-Programme im Bordrechner eines Bahn- und Lageregelungssystems vorliegen. Außerdem wird erfindungsgemäß zur Messung der Laufzeit eines GPS-(Pseudorange) Signa-les regelmäßig zwischen allen, bzw. den meisten (geometrisch) sichtbaren GPS-Satelliten umgeschaltet, so daß geometrisch unabhängige Meßinformationen erhalten werden.

Eine weitere erfindungsgemäße Maßnahme zur Verbesserung der Positionsschätzung besteht darin, daß auf im Bordrechner aktualisierte Informationen zurückgegriffen werden kann, z.B. auf die durch Triebwerke erzeugten äußeren Schubkräfte. Diese Möglichkeit wird dadurch geschaffen, daß erfindungsgemäß der GPS-Empfänger in den bordseitigen Satellitenrechner integriert ist, d.h. die relevanten Informationen wie Düsen-Einschaltzeiten, Schubrichtungen und Kalibrierungsparameter der Triebwerke, etc. sind ohnehin im Bordrechner eines Satelliten vorhanden.

Zur Ermittlung und Überwachung der Güte der Meßgeometrie, d.h. der Verteilung der GPS-Satelliten, die zur Positionsbestimmung benutzt werden, kann nun nicht mehr der konventionelle DOP-Faktor verwendet werden, da dieser nur für mindestens vier gleichzeitig sichtbare GPS-Satelliten definiert ist. Das DOP-Maß kann erfindungsgemäß jedoch durch ein modifiziertes DOP-Maß ersetzt werden, das nicht nur die geometrische Verteilung der GPS-Satelliten, sondern auch deren zeitliche Verteilung sowie die nominale Bewegung des Empfängers mit berücksichtigt.

Im folgenden wird die Erfindung anhand der beiliegenden Figuren beschrieben. Es zeigen:

Fig. 1 eine funktionale Darstellung des erfindungsgemäßen Navigationssystems und
Fig. 2 eine Darstellung der Funktionen des FPGA des Navigationssystems nach der Fig. 1.

Das dargestellte GPS-Navigationssystem 1 umfaßt im wesentlichen vier Komponenten: eine Antenne (nicht gezeigt), ein HF(Hochfrequenz)-Front-End 3 mit einem Vorverstärker, einem Abwärtsmischer und einem A/D-Wandler, einen FPGA 5 zur Signalvorverarbeitung sowie einen Signalprozessor 7 und einen üblicherweise in dem Satelliten vorgesehenen Bordrechner 9.

Die Antenne und das HF-Front-End 3 sind bei der vorliegenden Erfindung im wesentlichen nach dem Stand der Technik gebildet. Der FPGA 5, der Signalprozessor 7 und der Bordrechner 9 unterscheiden sich jedoch deutlich vom Stand der Technik, insbesondere in funktionaler Hinsicht.

Das HF-Front-End 3 erhält von der Antenne (nicht gezeigt) über eine entsprechende Datenleitung Eingangssignale 11. Weiterhin erhält das HF-Front-End 3 zur Synchronisation mit dem FPGA 5 ein Referenzsignal 12 mit vorzugsweise 10 MHz. Daraus leitet das HF-Front-End 3 ein Mastersignal 13 mit einer Taktfrequenz von vorzugsweise 40 MHz ab, das über eine entsprechende Signalleitung einen Zeitgeber (Clock-Synthesizer) 15 geschickt wird. Der Zeitgeber 15 sendet über entsprechende Leitungen 16, 17 ein entsprechendes Abtastzeitsignal 18 zum einen an das Front-End 3 und zum anderen an den FPGA 5. Der Zeitgeber 15 erhält zusätzlich über eine entsprechende Eingangssignalleitung ein Sythesizer-Steuersignal 19. Aufgrund dieses Synthesizer-Steuersignals 19 gibt der Zeitgeber 15 aufgrund interner Funktionen (nicht beschrieben) das Abtastsignal 18 in einer vom HF-Front-End 3 und auch vom FPGA 5 geforderten Frequenz, insbesondere in den Frequenzen 5,71 MHz und 6,67 MHz, ab. Der FPGA 5 ist über eine Datenbusleitung 20 mit dem Signalprozessor 7 verbunden, so daß diese beiden Module im Datenaustausch stehen. Zusätzlich ist der FPGA 5 in der Lage, Interrupt-Signale über zwei entsprechende Leitungen 21 an den Signalprozessor 7 zu senden, um eine geeignete Datenkommunikation zwischen dem FPGA 5 und dem Signalprozessor 7 zu gewährleisten. Außerdem stehen der Signalprozessor 7 und der Bordrechner 9 über eine Datenbusleitung 25 im Datenaustausch.

Der FPGA (Field Programmable Gate Array) 5 empfängt von dem Front-End 3 über digitale Signalleitungen 14 serielle Daten, die er einer Vorverarbeitung unterzieht. Der Signalprozessor 7 erzeugt Rohdaten der Meßwerte, die im Bordrechner 9 weiter verarbeitet werden. Die von dem Signalprozessor erzeugten Daten umfassen u.a. Laufzeitmeßdaten, Doppler-Frequenzdaten oder Navigationsdaten, z.B. Ephemerisund Almanach-Daten. Der Bordrechner 9 umfaßt alle funktionellen und gerätetechnischen Module eines Bahn- und Lageregelungssystems für einen Satelliten. Ein Referenz-Signal 12 wird von einem im Bordrechner 9 vorgesehenen Oszillator über eine Datenleitung an das Front-End 3 gesendet.

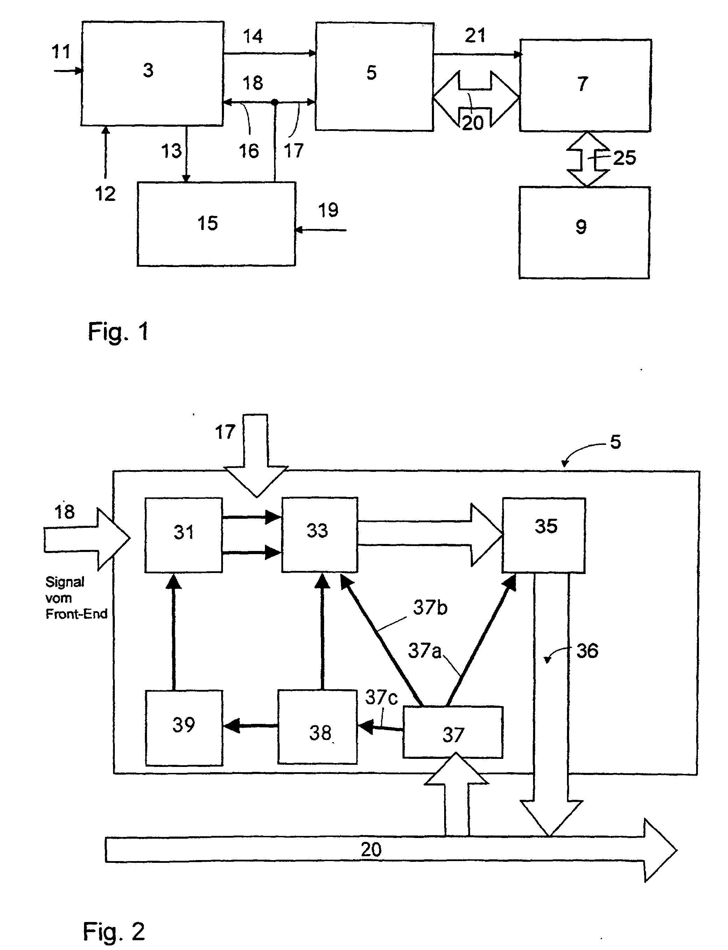

Das zur Signalvorverarbeitung eingesetzte FPGA 5 ist in Fig. 2 schematisch dargestellt. Dieses umfaßt die digitale Abwärtsmischung 31 ins Basisband (Wandlung des Eingangssignals in ein Signal niedriger Frequenz) mit Tiefpaßfilterung und mit einem Komparator, der den Signalwert festlegt (in der Fig. 2 nicht explizit gezeigt), einen Packer 33 zum Zusammenfassen von Bit-Informationen in Prozessor-Worte und Abspeichern dieser Worte in einen FIFO-Speicher 35. Der "Ausgang" des FIFO 35 ist ein digitales Basisband-Signal 36, das üblicherweise durch Inphase- und Quadrature-Anteile repräsentiert ist, dessen Frequenz im wesentlichen die Dopplerfrequenz repräsentiert. In diesem Signal 36 sind der Pseudo-Random-Noise-(PRN)Code und die Navigationsdaten (50Hz) enthalten.

Der FPGA umfaßt weiterhin ein Kontrollregister 37, einen Zeitbasis-Generator 38 und einen Referenz-Synthesizer 39. Dabei ist das Kontroll-Register 37 an den Datenbus 20 gekoppelt und steht über Signal- oder Datenleitungen 37a, 37b, 37 mit dem FIFO 35, dem Packer 33 und mit dem Zeitbasis-Generator 38 in Verbindung. Letzterer ist über eine Leitung 41 mit dem Referenz-Synthesizer 39 verbunden, der wiederum mittels der Leitung 42 mit dem Abwärts-Mischer 31 gekoppelt ist.

Die Weiterverarbeitung des Signals 36 im Signalprozessor 7 umfaßt hauptsächlich die Korrelation mit dem GPS-Code und mit dessen Trägersignal, der Detektion des Trägerphasen- und/oder des Frequenzfehlers und des Code-Delay-Fehlers, einen Filter der Regelschleifen für Frequenz-, Phasen- und Delay-Lock-Loop, sowie eine Dekodierung der Navigationsdaten. Diese Funktionen sind softwaremäßig realisiert und werden auf dem Signalprozessor 7 ausgeführt. Der Signalprozessor 7 wird erfindungsgemäß dadurch entlastet, daß das FPGA 5 die Funktionen der Abwärtsmischung 31 und des Packers 33, die mit sehr hoher Frequenz ausgeführt werden müssen, übernimmt. Die Ergebnisse des Signalprozessors 7 sind u.a. genannte Meßwerte, die zur Positionslösung benötigt werden.

Die Positionslösung basiert auf einem sequentiellen Schätzverfahren, die üblicherweise mit Hilfe eines Kalman-Filters durchgeführt wird. Kalman- Filter werden auch im Stand der Technik zur Bestimmung der Navigationslösung eingesetzt. Das dafür notwendige dynamische Modell umfaßt bei einem 1-Kanal-Navigationssystem sowohl die Bahndynamik als auch die Uhrendynamik. Bei einem 2-Kanal Empfänger kann durch Bildung von sogenannten Einfach-Differenzen der Uhren-Bias eliminiert werden. Dadurch läßt sich die Modellierung der (unsicheren) Uhrendynamik umgehen.

Bei einer relativ genauen Modellierung der Bahndynamik eines Satelliten lassen sich trotz einer eingeschränkten Anzahl von Empfänger-Kanälen (1 oder 2), vergleichbare oder nur unwesentlich schlechtere Navigationsgenauigkeiten erreichen als mit einer sehr großen Anzahl von Empfängerkanälen. Eine genaue Modellierung ist dadurch möglich, daß der Navigationsalgorithmus des Signalprozessors 7 über eine Datenbus-Leitung 25 direkt im Datenaustausch mit dem Bordrechner 9 steht und somit auf alle notwendigen (aktualisierten) Daten, z.B. Triebwerks-spezifische Daten, wie z.B. Einbaurichtungen der Düsen, Schubniveau, Ein- und Ausschaltzeiten der Düsen, Satellitenmasse, und/oder auch den Solardruck-Koeffizient, Zugriff hat. Dabei ist vorzugsweise der Signalprozessor 7 mit dem Bordrechner 9 zusammen hardwaremäßig in einem Rack eingebaut.

Da zur Bestimmung der Position des Satelliten erfindungsgemäß vorzugsweise weniger als vier Verarbeitungskanäle benutzt werden, d.h. weniger als vier GPS-Satellitensignale parallel empfangen und verarbeitet werden, kann das üblicherweise verwendete DOP-Maß zur Genauigkeits-Abschätzung nicht benutzt werden, weil dieses nur für mindestens vier parallele Verarbeitungskanäle definiert ist.

Erfindungsgemäß und insbesondere bei weniger als vier Verarbeitungskanälen werden zur Navigation zeitlich aufeinander folgende Meßwerte verarbeitet (sequentielle Schätzverfahren). Entsprechend dieser Vorgehenesweise wird eine entsprechendes Genauigkeitsmaß $\mu$ definiert, das nicht nur die geometrische, sondern auch die zeitliche Verteilung der Meßwerte berücksichtigt.

Die Maßzahl $\mu$ wird berechnet durch

$$\mu = \sqrt{\text{trace}(M)}$$

wobei die Funktion trace, d.h. mathematisch die Spur, die Summe der Diagonalelemante einer Matrix M bezeichnet, die die Kovarianzmatrix des Zustandsfehlers $\tilde{x}$ zum Zeitpunkt t=0 ($\tilde{x}_o$) ist und folgendermaßen im Navigationssystem ermittelt wird:

$$M = E\{\tilde{x}_o\,\tilde{x}_o{}^T\} = \underbrace{\left\{\sum_{i=1}^{n} \Phi(i,0)^T C(i)^T S^{-1} C(i) \Phi(i,0)\right\}^{-1}}_{=:M}$$

$\Phi$ ist die sogenannte Transitionsmatrix, die die Dynamik der Bahnbewegung des messenden Satelliten und die Dynamik der Uhr des Navigationssystems beschreibt und im Navigationssystem mit Hilfe von Modell-Annahmen ermittelt wird. Zur Bedeutung von C und $\upsilon$ ist zu sagen, daß der Zustand x(k) zum Zeitpunkt t=k allgemein mittels

$$x(k) = \Phi(k,0)x(0)$$

mathematisch definiert ist, wobei x(0) den Zustand des Satelliten zu einem Anfangs-Zeitpunkt bezeichnet. Bei der Ermittlung von M ist C weiterhin die Meßmatrix und beschreibt die Zuordnung zwischen Bewegungszustand x(k) und Meßgrößen y(k) und S die Kovarianz-Matrix des Meßrauschens $\upsilon$. Die Bedeutung von C und $\upsilon$ des vom Navigationssystem gemessenen Meßwerts y kann durch die Gleichung

$$y(k) = C(k)x(k) + \upsilon(k)$$

allgemein beschrieben werden.

C hängt im wesentlichen von der Sichtlinie (Richtungsvektor) vom Navigationssystem zu den jeweiligen GPS-Satelliten ab. S wird aufgrund von Modell-Annahmen festgelegt und beschreibt die Güte (Ungenauigkeit) der Meßwerte y(k).

Bei einem Ein-Kanal-Navigationssystem, das Meßwerte der Signal-Laufzeit als auch der Dopplerfrequenz liefert, hat der Vektor Y die Dimension 2 x 1 und die Meßmatrix C die Dimension 2 x 8. Liegen mehrere Kanäle und/ oder keine Doppler-Informationen vor, ändert sich die Dimension entsprechend. Bei drei Kanälen ohne Doppler-Information hat der Vektor Y die Dimension 3 x 1 und die Meßmatrix C die Dimension 3 x 8, während die Dimension von Y und C bei drei Kanälen mit Doppler-Information 6 x 1 bzw. 6 x 8 sind.

Die Anzahl n der betrachteten Zeitpunkte der Messungen von der Gegenwart in die Vergangenheit sollte nicht zu hoch sein, um deutlich eine ungünstige Situation hinsichtlich unabhängiger Messungen (geomtrisch/ zeitlich) erkennen zu können.

Je nach Anwendung kann die Maßzahl $\mu$ auch nur aus ausgewählten Diagonalelementen von M berechnet werden. Sind z.B. nur Positionsmessungen relevant, so kann

$$\mu_p = \sqrt{M_{11} + M_{22} + M_{33}}$$

verwendet werden, was dem klassischen PDOP bei einer zeitlichen Punktbestimmung der Position entspricht.

Um eine Aussage über die momentane Navigationsgenauigkeit machen zu können, wird die Maßzahl $\mu$ mit den tatsächlich akquirierten GPS-Satelliten über eine vorgebbare Zeitspanne berechnet, zum Beispiel über die letzten n-Meßpunkte. Dadurch kann leicht überwacht werden, ob die angefallenen Meßdaten eine gut konditionierte Positionsschätzung zulassen. Ist keine Überwachungsmöglichkeit gegeben, so müßte eine entsprechende Analyse mit Hilfe von telemetrierten Rohdaten an der Bodenstation erfolgen, was einen sehr hohen Aufwand bedeutet.

Erfindungsgemäß werden zur Ermittlung von Positionsdaten, Geschwindigkeitsdaten und/oder der GPS-Systemzeit sequentielle Schätzverfahren nach dem Stand der Technik verwendet, wobei statt der üblicherweise verwendeten DOP-Maßzahl die erfindungsgemäße Maßzahl μ verwendet wird. Das genannte sequentielle Schätzverfahren ist beispielsweise in Bradford W. Parkinson, James J. Spilker, Penina Axelrad, Per Enge, "Global Positioning System: Theory and Applications, Volume 1" ("Progress in Astronautics and Aeronautics, Volume 163, American Institute of Aeronautics and Astronautics") beschrieben.

Das sequentielle Schätzverfahren kann im Bordrechner 9 oder im Signalprozessor 7 implementiert sein. Wesentlich ist, daß die sequentiellen Schätzverfahren im Bordrechner 9 vorhandene und aktualisierte Systemdaten, z.B. Triebwerksdaten, verarbeiten, wobei die Berücksichtigung dieser Daten in üblicher Weise erfolgt. Systemdaten sind erfindungsgemäß diejenigen Daten, die das dynamische Modell der Satelliten-Bewegung und der zeitlichen Veränderung der Uhr beschreiben und einen Einfluß auf die Navigations-Algorithmen haben.

Die Erzeugung der Rohdaten-Meßwerte im Signalprozessor 7 erfolgt in einer entsprechenden Anzahl von parallelen Kanälen, wobei diese Anzahl vorzugsweise geringer als vier ist, um die Belastung des Signalprozessors 7 zu minimieren. Dabei bedeutet das Vorsehen von parallelen Kanälen nicht eine Vermehrfachung des Signalprozessors 7 zu einer zeitlich simultanen Signalverarbeitung. Vielmehr wird üblicherweise eine digitale software-technische Echtzeit-Verarbeitung auf einem Signalprozessor 7 realisiert.

## Patentansprüche

1. GPS-Navigationssystem für Raumfahrtanwendungen mit folgenden Komponenten:

   - einer Antenne, über eine Signalleitung (11) verbunden mit einem Front-End (3), welche zum Empfang von GPS-Signalen ausgebildet sind,
   - einer Einrichtung (5) zur digitalen Signalvorverarbeitung der empfangenen GPS-Signale, die mit dem Front-End (3) verbunden ist,
   - einem Signalprozessor (7) zur Dekodierung der GPS-Signale und zur Erzeugung von Rohdaten-Messewerten, der mit der Einrichtung (5) verbunden ist,

   wobei

   - die Einrichtung (5) über eine erste Datenbus-Leitung (20) zum Datenaustausch mit dem Signalprozessor (7) verbunden ist

   **dadurch gekennzeichnet,**
   **dass** der Signalprozessor (7) zur Weiterverarbeitung der Rohdaten-Messwerte über eine zweite Datenbus-Leitung (25) zum Datenaustausch mit einem Bordrechner (9) eines Satelliten verbunden ist, wobei das GPS-Navigationssystem und der Bordrechner (9) eine integrierte Einrichtung bilden und das GPS-Navigationssystem Funktionen oder Ressourcen mit dem Bordrechner (9) teilt.

2. GPS-Navigationssystem nach Anspruch 1, **dadurch gekennzeichnet, dass** der Bordrechner (9) Module eines Bahn- und Lageregelungssystems für einen Satelliten aufweist und zusätzlich zur Verarbeitung von Rohdaten-Messwerten des Signalprozessors (7) ausgebildet ist.

3. GPS-Navigationssystem nach Anspruch 1 oder 2, **dadurch gekennzeichnet, dass** der Signalprozessor (7) über die Datenbus-Leitung (25) mit einem Datenbereich des Bordrechners (9) in Verbindung steht, der triebwerksspezifische Daten enthält.

4. GPS-Navigationssystem nach einem der vorhergehenden Ansprüche, **dadurch gekennzeichnet, daß** ein Zeitgeber (15) vorgesehen ist, der einen Eingang aufweist, der mit dem Front-End (3) über eine Leitung (13) verbunden ist und der einen Ausgang aufweist, der mit dem Front-End (3) und der Einrichtung (5) zur digitalen Signalvorverarbeitung über Leitungen (16, 17) verbunden ist.

5. GPS-Navigationssystem nach einem der vorhergehenden Ansprüche, **dadurch gekennzeichnet, daß** der Bordrechner (9) einen Ausgang eines Referenzsignals (12) eines Oszillators aufweist, der über eine Datenleitung mit einem Eingang des Front-End (3) verbunden ist.

**6.** GPS-Navigationssystem nach einem der vorhergehenden Ansprüche, **dadurch gekennzeichnet, daß** der Bordrechner (9) zur Durchführung eines sequentiellen Schätzverfahrens zur Bestimmung der Positionslösung ausgebildet ist.

**7.** GPS-Navigationssystem nach einem der vorhergehenden Ansprüche, **dadurch gekennzeichnet, daß** der Signalprozessors (7) zur Durchführung eines sequentiellen Schätzverfahrens zur Bestimmung der Positionslösung ausgebildet ist.

**8.** GPS-Navigationssystem nach einem der vorhergehenden Ansprüche, **dadurch gekennzeichnet, daß** das GPS-Navigationssystem weniger als vier parallele Verarbeitungskanäle aufweist.

**9.** Verfahren zum Betreiben eines GPS-Navigationssystems nach einem der vorhergehenden Ansprüche, **dadurch gekennzeichnet, daß** über die Datenbus-Leitung (25) triebwerks-spezifische Daten an den Signalprozessor (7) übertragen werden.

**10.** Verfahren nach Anspruch 9, **dadurch gekennzeichnet, daß** die triebwerks-spezifischen Daten Einbaurichtung, Schubniveau oder Ein- und- Ausschaltzeiten der Düsen umfassen.

**11.** Verfahren nach einem der Ansprüche 9 oder 10, **dadurch gekennzeichnet, daß** über die Datenbus-Leitung (25) zusätzlich die Satellitenmasse an den Signalprozessor (7) übermittelt wird.

**12.** Verfahren nach einem der Ansprüche 9 bis 11, **dadurch gekennzeichnet, daß** über die Datenbus-Leitung (25) zusätzlich der Solardruck-Koeffizient an den Signalprozessor (7) übermittelt wird.

**13.** Verfahren nach einem der Ansprüche 9 bis 12, **dadurch gekennzeichnet, daß** das Front-End (3) aufgrund des Referenzsignals (12) arbeitet, das über eine Datenleitung vom Oszillator des Bordrechners (9) an das Front-End (3) über tragen wird.

**14.** Verfahren nach einem der Ansprüche 9 bis 13, **dadurch gekennzeichnet, daß** zur Bestimmung der Positionsdaten, der Geschwindigkeit und der GPS-Zeit des messenden Satelliten sequentielle Schätzverfahren verwendet werden, die Systemdaten aus dem Bordrechner (9) verarbeiten.

**15.** Verfahren nach Anspruch 14, **dadurch gekennzeichnet, daß** das sequentielle Schätzverfahren zur Genauigkeitsabschätzung die Maßzahl $\mu = \sqrt{M_{11} + M_{22} + M_{33}}$ verwendet, wobei M die Kovarianzmatriz des Schätzfehlers des Systemzustandes ist.

**16.** Verfahren nach einem der Ansprüche 14 bis 15, **dadurch gekennzeichnet, daß** das sequentielle Schätzverfahren vom Signalprozessor (7) ausgeführt wird.

**17.** Verfahren nach einem der Ansprüche 14 bis 15, **dadurch gekennzeichnet, daß** das sequentielle Schätzverfahren vom Bordrechner (9) ausgeführt wird.

**Claims**

**1.** A GPS navigation system for space-travel applications comprising the following components:

- an antenna connected via a signal line (11) to a front end (3) that is designed to receive GPS signals,
- a device (5) for the digital signal processing of the received GPS signals that is connected to the front end (3),
- a signal processor (7) for decoding the GPS signals and for generating raw-data measured values that is connected to the device (5), wherein
- the device (5) is connected via a first data-bus line (20) to the signal processor (7) for the purpose of data exchange,

**characterized in that**
the signal processor (7) is connected, for the purpose of further processing raw-data measured values, to an on-board computer (9) of a satellite via a second data-bus line (25) for the purpose of data exchange, wherein the GPS navigation system and the on-board computer (9) form an integrated device and the GPS navigation system shares functions or resources with the on-board computer (9).

2. A GPS navigation system according to Claim 1, **characterized in that** the on-board computer (9) comprises modules of a trajectory- and position-regulating system for a satellite and is additionally designed to process raw-data measured values of the signal processor (7).

3. A GPS navigation system according to Claim 1 or 2, **characterized in that** the signal processor (7) is connected via the data-bus line (25) to a data area of the on-board computer (9) that contains engine-specific data.

4. A GPS navigation system according to any one of the preceding claims, **characterized in that** a timer (15) is provided that has an input that is connected via a line (13) to the front end (3) and that has an output that is connected via lines (16, 17) to the front end (3) and the device (5) for digital signal processing.

5. A GPS navigation system according to any one of the preceding claims, **characterized in that** the on-board computer (9) has an output of a reference signal (12) of an oscillator that is connected via a data line to an input of the front end (3).

6. A GPS navigation system according to any one of the preceding claims, **characterized in that** the on-board computer (9) is designed to perform a sequential estimation method for determining the position solution.

7. A GPS navigation system according to any one of the preceding claims, **characterized in that** the signal processor (7) is designed to perform a sequential estimation method for determining the position solution.

8. A GPS navigation system according to any one of the preceding claims, **characterized in that** the GPS navigation system has less than four parallel processing channels.

9. A method of operating a GPS navigation system according to any one of the preceding claims, **characterized in that** engine-specific data are transmitted to the signal processor (7) via the data-bus line (25).

10. A method according to Claim 9, **characterized in that** the engine-specific data comprise installation direction, thrust level or switching-on and switching-off times of the jets.

11. A method according to either of Claims 9 or 10, **characterized in that** the satellite mass is additionally conveyed to the signal processor (7) via the data-bus line (25).

12. A method according to any one of Claims 9 to 11, **characterized in that** the solar-pressure coefficient is additionally conveyed to the signal processor (7) via the data-bus line (25).

13. A method according to any one of Claims 9 to 12, **characterized in that** the front end (3) operates on the basis of the reference signal (12) that is transmitted via a data line from the oscillator of the on-board computer (9) to the front end (3).

14. A method according to any one of Claims 9 to 13, **characterized in that** sequential estimation methods that process system data from the on-board computer (9) are used to determine the position data, the velocity and the GPS time of the measuring satellite.

15. A method according to Claim 14, **characterized in that** the sequential estimation method uses the coefficient $\mu = \sqrt{M_{11} + M_{22} + M_{33}}$ for the purpose of accuracy estimation, where M is the covariance matrix of the estimation error of the system state.

16. A method according to either of Claims 14 or 15, **characterized in that** the sequential estimation method is executed by the signal processor (7).

17. A method according to either of claims 14 or 15, **characterized in that** the sequential estimation method is executed by the on-board computer (9).

**Revendications**

1. Système de navigation GPS pour des applications spatiales comportant les composants suivants :

   - une antenne, reliée à un ordinateur frontal (3) par le biais d'une ligne de transmission des signaux (11), laquelle antenne est configurée pour recevoir des signaux GPS,
   - un dispositif (5) de prétraitement numérique des signaux GPS reçus qui est relié à l'ordinateur frontal (3),
   - un processeur de signalisation (7) pour le décodage des signaux GPS et pour la création de valeurs de mesure de données brutes, qui est relié au dispositif (5), sachant que
   - le dispositif (5) est relié au processeur de signalisation (7) par le biais d'une première ligne de bus de données (20) servant à l'échange des données,

   **caractérisé en ce que**,
   le processeur de signalisation (7) de traitement ultérieur des valeurs de mesure des données brutes est relié à un ordinateur de bord (9) d'un satellite par le biais d'une seconde ligne de bus de données (25) servant à l'échange des données, sachant que le système de navigation GPS et l'ordinateur de bord (9) forment un dispositif intégré et que le système de navigation GPS partage des fonctions ou des ressources avec l'ordinateur de bord (9).

2. Système de navigation GPS selon la revendication 1, **caractérisé en ce que** l'ordinateur de bord (9) comprend des modules d'un système de réglage d'orbite et d'orientation pour un satellite et est, en outre, configuré pour le traitement de valeurs de mesure des données brutes du processeur de signalisation (7).

3. Système de navigation GPS selon la revendication 1 ou 2, **caractérisé en ce que** le processeur de signalisation (7) est en contact avec une zone de données de l'ordinateur de bord (9) par le biais de la ligne de bus de données (25), zone qui contient des données spécifiques au propulseur.

4. Système de navigation GPS selon l'une quelconque des revendications précédentes, **caractérisé en ce qu'**on a prévu un temporisateur (15), qui comprend une entrée qui est reliée à l'ordinateur frontal (3) par le biais d'une ligne (13), et qui comprend une sortie qui est reliée à l'ordinateur frontal (3) et au dispositif (5) de prétraitement des signaux numériques par le biais de lignes (16, 17).

5. Système de navigation GPS selon l'une quelconque des revendications précédentes, **caractérisé en ce que** l'ordinateur de bord (9) comprend une sortie d'un signal de référence (12) d'un oscillateur qui est relié à une entrée de l'ordinateur frontal (3) par le biais d'une ligne de données.

6. Système de navigation GPS selon l'une quelconque des revendications précédentes, **caractérisé en ce que** l'ordinateur de bord (9) est configuré pour l'exécution d'un procédé d'évaluation séquentiel, pour la détermination du calcul de l'orientation.

7. Système de navigation GPS selon l'une quelconque des revendications précédentes, **caractérisé en ce que** le processeur de signalisation (7) est configuré pour l'exécution d'un procédé d'évaluation séquentiel pour la détermination du calcul de l'orientation.

8. Système de navigation GPS selon l'une quelconque des revendications précédentes, **caractérisé en ce que** le système de navigation GPS comprend moins de quatre canaux de traitement parallèles.

9. Procédé d'exploitation d'un système de navigation GPS selon l'une quelconque des revendications précédentes, **caractérisé en ce que** des données spécifiques au propulseur sont transmises au processeur de signalisation (7) par le biais de la ligne de bus de données (25).

10. Procédé selon la revendication 9, **caractérisé en ce que** les données spécifiques au propulseur comprennent le sens d'installation, le niveau de poussée ou les temps de mise en marche et d'arrêt des buses.

11. Procédé selon l'une des revendications 9 ou 10, **caractérisé en ce qu'**en outre la masse satellitaire est transmise au processeur de signalisation (7) par le biais de la ligne de bus de données (25).

12. Procédé selon l'une des revendications 9 à 11, **caractérisé en ce qu'**en outre le coefficient de pression solaire est transmis au processeur de signalisation (7) par le biais de la ligne de bus de données (25).

13. Procédé selon l'une des revendications 9 à 12, **caractérisé en ce que** l'ordinateur frontal (3) travaille sur la base du signal de référence (12) qui est transmis à l'ordinateur frontal (3) par le biais d'un ligne de données, à partir de l'oscillateur de l'ordinateur de bord (9).

14. Procédé selon l'une des revendications 9 à 13, **caractérisé en ce que**, pour la détermination des données d'orientation, de la vitesse et du temps GPS du satellite de mesure, on utilise des procédés d'évaluation séquentiels qui traitent les données système provenant de l'ordinateur de bord (9).

15. Procédé selon la revendication 14, **caractérisé en ce que** le procédé d'évaluation séquentiel utilise le chiffre d'indice $\mu = \sqrt{M_{11}+M_{22}+M_{33}}$ pour l'estimation de la précision, sachant que M est la matrice de covariance de l'erreur d'évaluation de l'état du système.

16. Procédé selon l'une des revendications 14 à 15, **caractérisé en ce que** le procédé d'évaluation séquentiel est exécuté par le processeur de signalisation (7).

17. Procédé selon l'une des revendications 14 à 15, **caractérisé en ce que** le procédé d'évaluation séquentiel est réalisé par l'ordinateur de bord (9).

Fig. 1

Signal
vom
Front-End

Fig. 2